(19) Europäisches Patentamt
European Patent Office
Office européen des brevets

(11) **EP 4 711 646 A1**

(12) **EUROPEAN PATENT APPLICATION**

(43) Date of publication:
**18.03.2026  Bulletin 2026/12**

(21) Application number: **25198179.1**

(22) Date of filing: **26.08.2025**

(51) International Patent Classification (IPC):
**F16H 61/47** (2010.01)

(52) Cooperative Patent Classification (CPC):
**F16H 61/47;** F16H 61/421; F16H 61/431;
F16H 2059/6846; F16H 2059/6853;
F16H 2059/6861; F16H 2059/6869

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.09.2024  IT 202400020557**

(71) Applicant: **Robert Bosch GmbH
70442 Stuttgart (DE)**

(72) Inventors:
• **Herrmann, Ronny
  89129 Langenau (DE)**
• **Werner, Franz
  89129 Langenau (DE)**
• **Brix, Norman
  89340 Leipheim (DE)**
• **Mueller, Matthias
  89129 Langenau (DE)**

(54) **METHOD FOR DETERMINING A VELOCITY OF AT LEAST ONE HYDRAULIC MOTOR IN A HYDROSTATIC DRIVE SYSTEM**

(57)     The present invention relates to a Method for determining a velocity of at least one hydraulic motor (3) in a hydrostatic drive system of a mobile working machine, wherein said hydrostatic drive system comprises a drive motor and a hydraulic pump (12), the rotation of which is ensured by said drive motor, and said at least one hydraulic motor (3) connected in a closed circuit to said hydraulic pump (12), wherein said hydraulic pump (12) has an adjustment unit (16) for adjusting the displacement of said hydraulic pump (12), wherein said displacement is adjustable by adjusting an angle of inclination ($\alpha_{pmp}$) of an inclined element (2), said method comprises the following steps:

a. Detecting a first operating variable, which corresponds to an actual angle of inclination ($\alpha_{pmp}$) of said inclined element (2) or a quantity dependent thereon;
b. Detecting a second operating variable, which corresponds to an actual revolution speed of said hydraulic pump (12) or a quantity dependent thereon;
c. Detecting a third operating variable, which corresponds to a displacement of said at least one hydraulic motor or a quantity dependent thereon;
d. Determining said velocity of said at least one hydraulic motor (3) based on said first, said second and said third operating variable.

**Fig. 1**

EP 4 711 646 A1

**Description**

TECHNICAL FIELD

The present invention relates to the field of a method for determining a velocity of at least one hydraulic motor in a hydrostatic drive system of a mobile working machine, a method for controlling said hydrostatic drive system of the mobile working machine, a computing unit adapted to perform such a method, a working machine including such a computing unit, a computer program that induces a computing unit to perform such a method, and a readable storage medium on which such a program is stored.

BACKGROUND

Mobile working machines with a hydrostatic drive system are commonly used in the state of the art. A drive motor (such as a diesel engine or electric motor) is configured to ensure the rotation of one or more hydraulic pumps mechanically connected to it. Such one or more hydraulic pumps enable the transformation of mechanical energy received from said drive motor into hydraulic energy, in the form of pressure. At least one hydraulic motor is hydraulically connected to said one or more hydraulic pumps so as to enable the transformation of said pressure supplied by said pump into mechanical energy.

Such a hydrostatic transmission is commonly known by the term hydrostatic continuously variable transmission (commonly called CVT transmission).

Said mobile work machines are typically equipped with electronically controlled or regulated hydrostatic drives, which are essential for efficient and precise movement. These drives play a critical role in various industrial, agricultural, and construction machines, where maneuverability, power, and control are paramount. To implement electronic driving control and ensure the safety functions of the drive system, the measurement of the output speed signal is usually required.

However, the process of capturing this output speed signal presents several challenges. Firstly, it incurs relatively high costs due to the necessity of using a speed encoder wheel. The production and integration of this component into the drive system add to the overall expense, which may not always be justifiable, especially in cost-sensitive applications. Additionally, when the encoder wheel is submerged in oil, which is often the case in hydrostatic systems, it can lead to efficiency losses. The oil causes additional friction, reducing the overall performance of the drive system.

Furthermore, in machines with multiple motors or wheel drives, accurately capturing the speed becomes even more complex. In such cases, multiple speed sensors are often required, each collecting data from different motors or wheels. This increases not only the complexity of the system but also the overall cost and potential for sensor malfunctions. Another critical issue arises in applications involving wheel hub motors, where the integration of a speed sensor can be structurally challenging or even impossible due to design constraints. The compact nature of wheel hub motors leaves little room for the installation of traditional speed-sensing components, making it difficult to implement a reliable speed measurement system.

Given these limitations, the need for alternative methods for detecting the output speed signal becomes evident. Overcoming these challenges could lead to more cost-effective, efficient, and reliable drive systems in mobile work machines, especially in applications where traditional speed sensors prove impractical.

BRIEF DESCRIPTION OF THE FIGURES

The present invention will be described with reference to the attached figures in which the same numbers and/or reference marks indicate the same and/or similar and/or corresponding parts of the system.

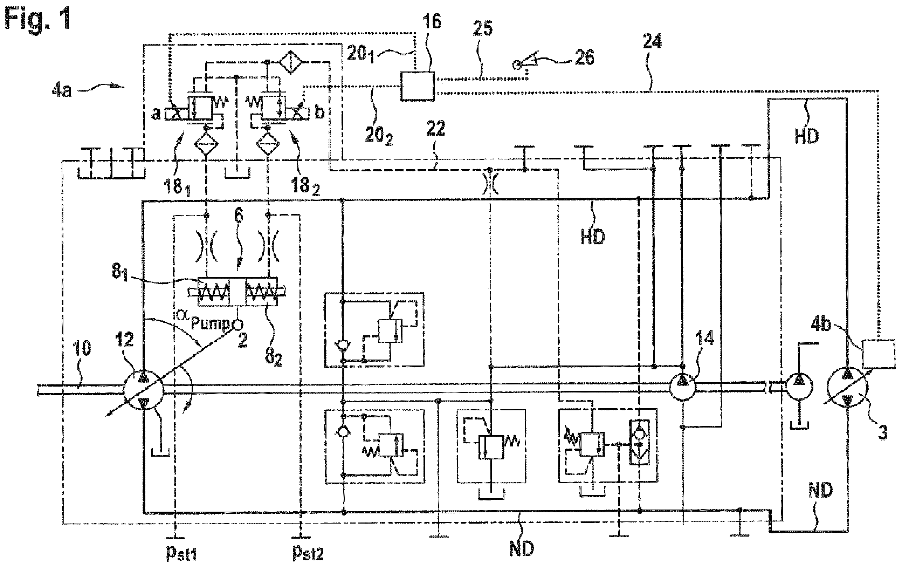

Figure 1 shows a hydraulic diagram of a propulsion of a mobile working machine according to a scheme known from the state of the art.

DETAILED DESCRIPTION

In the following, the present invention is described by referring to particular forms of embodiment as illustrated in the attached drawing plates. However, the present invention is not limited to the particular forms of embodiment described in the following detailed description and depicted in the figures, but rather the forms of embodiment described simply exemplify the various aspects of the present invention, the scope of which is defined by the claims. Further modifications and variations of the present invention will appear clear to the person in the art.

In this description, the term working machine is used to refer to any man-driven (or even remotely operated) mechanical means of transporting people, animals, or things, whether circulating on the road or usable off the road, such as on construction sites, quarries, or mining operations, etc. Thus, an example of a vehicle may be a construction machine such as a bulldozer. In general, a vehicle is defined as any vehicle capable of performing vehicle displacement.

Figure 1 shows a hydraulic diagram of a traction system for a working machine with respect to which an adjustment method may be used according to an embodiment of the present invention. Only the components essential to the invention are described. The system has a casing 1 on which two working connections are formed to which a working line of a closed circuit, for example a hydraulic motor 3 such as that shown in the figure, is connected respectively. In this way a drive system for a mobile working machine (not shown), such as a bulldozer, is formed.

The axial piston pump 12 is made with an oblique disc 2 (also referred to more generally as an oblique element) whose angle of oscillation $\alpha_{pmp}$ can be set by means of an adjusting unit 4, so as to go to adjust the displacement of the pump itself. A double-action regulating cylinder 6 is used for this purpose, which has a first chamber $8_1$ of the regulating pressure and a second chamber $8_2$ of the regulating pressure acting in the opposite direction to the first chamber.

A first control pressure $p_{st1}$ acts in the first chamber of control pressure $8_1$ in the direction of an increase in swing angle $\alpha_{pmp}$ and thus in the direction of an increase in pump displacement 12. In the opposite direction to this, a second control pressure $p_{st2}$ in the second chamber $8_2$ acts in the direction of a reduction in the oscillation angle $\alpha_{pmp}$ and thus in the direction of a reduction in pump displacement 12. In this way, a difference in control pressure $\Delta_{pst}$ can be defined given by the difference of the first and second control pressures $p_{st1}$, $p_{st2}$, this difference in control pressure $\Delta pst$ by definition always acts in the direction of an increase in the oscillation angle $\alpha_{pmp}$ and thus in the displacement itself.

Through a drive shaft 10 of the axial piston pump, its drive unit is driven and in addition also a feed pump 14. Drive shaft 10 can be driven by a diesel engine (not shown) or alternatively also by an electric motor and rotates with a variable number of revolutions. This number of revolutions acts together with the control pressure difference in the direction of an increase in the oscillation angle $\alpha_{pmp}$.

In the particular example shown in the figure, the axial piston pump 12, in the case of forward travel, feeds a high pressure line HD which allows it to supply a certain pressure to the hydraulic motor 3. The high pressure HD, which is also referred to as working pressure, acts in the direction of a reduction in the oscillation angle $\alpha_{pmp}$. These relationships are called axial piston pump characteristic and are stored in an electronic control unit 16 in the form of formulas and/or as characteristic diagrams and/or characteristic lines or more in general functions.

The two control pressures are controlled by two pressure reducing valves $18_1$, $18_2$. These respectively have an electric magnet a, b, which via a respective electrical line $20_1$, $20_2$ is connected with the electronic control unit 16. The two pressure reduction valves $18_1$, $18_2$ are designed so that the respective control pressure $p_{st1}$, $p_{st2}$ is proportional to the respective current intensity ($20_1$, $20_2$).

The two pressure reducing valves $18_1$, $18_2$ are supplied on the inlet side via a supply pressure line 22 from supply pump 14.

It is to be noted that in the previous description, for simplicity, it has been shown that the hydraulic system comprises a single hydraulic motor 3. However, as it will be clearer in the prosecution of the description, more than one hydraulic motor 3 can be present (for example one motor for each driven wheel). Each of the hydraulic motors can be alternatively a constant motor or a hydraulic motor with variable displacement.

In the following a method for determining the rotation velocity of the at least one motor 3 is described. It is to be noted that this method enables to derive the driving velocity of the mobile working machine based on said rotation velocity of the hydraulic motor 3.

The inventor observed that, for different reasons, it is advantageous if a speed sensor at the hydraulic motor 3 is omitted. For that scope a method is needed to enable the determination of the rotation speed of the hydraulic motor 3. The idea of this invention is to determine the rotation velocity based on different operating variables of the hydraulic drive system.

According to a first embodiment of the present invention a first operating variable, which corresponds to an actual angle of inclination $\alpha_{pmp}$ of said inclined element 2 or a quantity dependent thereon is detected. Further, a second operating variable, which corresponds to an actual revolution speed of said hydraulic pump 12 or a quantity dependent thereon is also detected. Furthermore, a third operating variable, which corresponds to a displacement of said at least one hydraulic motor 3 or a quantity dependent thereon is detected. It is to be noted that, for the case in which a plurality of hydraulic motors are present, the third variable corresponds to the sum of the displacements of the hydraulic motors (the effective volume of the motors). It is to be noted that, for the cases in which the hydraulic motor 3 is a constant motor, the third value is a constant which is know from the beginning. Therefore, with the expression "determining a third variable" it is also included the case in which the value of the third value is known from the beginning.

Based on said three operating variables it is possible to determine the rotation velocity of the motor. In particular, the following formula can be used:

$$n_{Mot} = (V_{maxP} * VgP * n_P) / (V_{maxM} * V_{gM})$$

wherein $n_{Mot}$ is the rotation velocity of the hydraulic motor 3, $V_{maxP}$ is the maximal displacement of the hydraulic pump 12, $V_{gP}$ is the swivel angle of the hydraulic pump 12, $n_P$ is the rotation velocity of the hydraulic pump 12, $V_{maxM}$ is the maximal displacement of the hydraulic motor 3 and $V_{gM}$ is the swivel angle of the hydraulic motor 3. With the above-mentioned formula with the product $V_{maxP}*V_{gP}$ it is derived the first operating variable. With the product $V_{maxM} * V_{gM}$ it is derived the third operating variable. Further, the second operating variable corresponds to the rotation velocity $n_P$ of the hydraulic pump 12.

With this method is the possible to determine the rotation velocity of the hydraulic motor 3 without the need of a sensor positioned at the hydraulic motor 3.

According to a further embodiment of the present invention, in order to obtain more reliable values for the rotation velocity of the hydraulic motor, a fluid leakage function of said hydrostatic drive system is used, wherein said fluid leakage function describes volume flow losses within said hydrostatic drive system based at least on a pressure within said hydrostatic drive system. In particular, the above-mentioned formula is rewritten accordingly:

$$n_{Mot} = (V_{maxP} * Vg_P * n_P - L) / (V_{maxM} * V_{gM})$$

wherein L corresponds to the leakage of said hydrostatic drive system. According to an embodiment of the present invention the leakage can be calculated according to the following formula (model):

$$L= k1*\Delta p + k2 * n_{M\_a}$$

wherein k1 and k2 are respectively a first and a second factor, $\Delta p$ is a pressure difference within the hydrostatic drive system (for example measured both at the inlet and at the outlet of the hydraulic pump 12) and $n_{M\_a}$ is a previous rotation velocity of the hydraulic motor (measured for example in a previous moment). Therefore, $n_{M\_a}$ corresponds to an information related to a previous velocity of the at least one hydraulic motor 3.

As can be seen, the leakage model (leakage function) comprises a pressure-dependent and a speed-dependent component (or part), wherein for the calculation of the leakage it is used the hydraulic motor speed of the previous time step, so that no sensor is needed at all. It is to be noted that, if an information relative to the actual velocity of the hydraulic motor is present (for example during a calibration of the mobile working machine in a laboratory or in a testing machine) this information can be used instead of the hydraulic motor speed of the previous time step.

To ensure that the leakage model provides reliable results in all the situations, which is very important for example for safety functions, especially when working in the mine and when the vehicle is stationary, it is necessary to adapt the leakage model to the vehicle-specific leakage of the vehicle.

According to an embodiment of the present invention the adaptation of the leakage model occurs in two steps.

In a first step the first factor k1 is calibrated (adjustment of the pressure-dependent leakage). The pressure-dependent leakage is adapted when the vehicle is unable to move. This condition occurs, for example, during calibration or when the parking brake is engaged. During this condition the rotation velocity of the hydraulic motor is equal to zero and, therefore, it follows that the first factor k1 can be calculated as follows:

$$k1= (V_{maxP} * Vg_P * n_P) / \Delta p$$

The constant k1 is determined during calibration at different pressures and pump speeds. Subsequently, the different values obtained are combined into a generally valid value through averaging or regression.

In a second step the second factor is calibrated (adjustment of the speed-dependent leakage). The speed-dependent leakage is determined while the machine is in operation. For this purpose, it is preferable for the measured swivel angle to be above a minimum threshold and the pressure to be below a maximum threshold. If these conditions are met, different measured values for k2 are taken at time- or speed-dependent operating points. The second factor k2 can be calculated as follows:

$$k2= [(V_{maxP} * Vg_P * n_P) - (V_{maxM} * Vg_M * n_M) - k1*\Delta p] / n_M$$

As disclosed above, for the calculation of k2, the rotation velocity of the hydraulic motor 3 derived in a previous step or alternatively a value know from the calibration conditions can be used. When the vehicle is stationary, the different values obtained are combined into a generally valid value through averaging or regression.

According to the method disclosed above, a vehicle-specific leakage is used, which, in combination with the volume flow balance, allows for the calculation of a virtual hydraulic motor speed from a measured swivel angle with a extremely high reliability.

Furthermore, it is to be noted that with knowledge of the wheel circumference, a vehicle speed can be derived from the virtual hydraulic motor rotation speed calculated above.

The information regarding the vehicle is extremely relevant and can be used for driving functions/logic such as a pump reversing logic, a speed limiter, a safety monitor, or a parking brake logic. Extremely relevant is if such an information is used for safety functions.

In conclusion, the invention provides a method for enabling a calculation of a virtual vehicle speed using a pump swivel angle sensor and using this signal in vehicle control and safety functions. The adaptation of the leakage model to the vehicle-specific leakage allows for reliable operation of safety functions, making it a valuable contribution to vehicle safety and control.

According to a further embodiment of the present invention a method for controlling the hydrostatic drive system of the mobile work machine is provided. According to this method the rotation velocity of the hydraulic motor is derived without a speed sensor of the motor. However, a free movement of the mobile working machine is allowed only after a leakage function comprising a pressure dependent is calibrated, so that it can be assured that the free movement of the mobile working machine is allowed in situations in which the virtual velocity derived is reliable.

The present invention also describes a computational unit adapted to perform a method according to any of the forms of embodiments presented above.

In addition, the present description includes a computer program that induces a computing unit to perform a method as described in the present invention.

A readable storage medium comprising the computer program stored thereon described above is also described.

Although the present invention has been described with reference to the forms of embodiment described above, it is clear to the person skilled in the art that various modifications, variations, and improvements of the present invention in light of the teaching described above and within the scope of the appended claims are possible without departing from the subject matter and scope of protection of the invention.

Finally, those areas that are believed to be known by experts in the field have not been described to avoid overshadowing the described invention unnecessarily.

Accordingly, the invention is not limited to the forms of embodiment described above, but is only limited by the scope of protection of the appended claims.

## Claims

1. Method for determining a velocity of at least one hydraulic motor (3) in a hydrostatic drive system of a mobile working machine, wherein said hydrostatic drive system comprises a drive motor and a hydraulic pump (12), the rotation of which is ensured by said drive motor, and said at least one hydraulic motor (3) connected in a closed circuit to said hydraulic pump (12), wherein said hydraulic pump (12) has an adjustment unit (16) for adjusting the displacement of said hydraulic pump (12), wherein said displacement is adjustable by adjusting an angle of inclination ($\alpha_{pmp}$) of an inclined element (2), said method being **characterized in that** it comprises the following steps:

    a. Detecting a first operating variable, which corresponds to an actual angle of inclination ($\alpha_{pmp}$) of said inclined element (2) or a quantity dependent thereon;
    b. Detecting a second operating variable, which corresponds to an actual revolution speed of said hydraulic pump (12) or a quantity dependent thereon;
    c. Detecting a third operating variable, which corresponds to a displacement of said at least one hydraulic motor or a quantity dependent thereon;
    d. Determining said velocity of said at least one hydraulic motor (3) based on said first, said second and said third operating variable.

2. Method according to claim 1, wherein for said determination of step d. a fluid leakage function of said hydrostatic drive system is used, wherein said fluid leakage function describes volume flow losses within said hydrostatic drive system based at least on a pressure within said hydrostatic drive system.

3. Method according to claim 2, wherein said leakage function comprises a pressure dependent part, wherein the method further comprises the following steps for calibrating said pressure dependent part of said leakage function:

    e. Ensuring that the mobile working machine is not able to be moved;
    f. Determining a first factor of said fluid leakage function based on said first and said second operating variable detected during said step e.;

4. Method according to claim 3, wherein said variable of said fluid leakage function is determined by taking into consideration values of said variable obtained at different operating conditions.

5. Method according to claim 4, wherein said operating conditions comprise at least two different revolution speeds of said hydraulic pump (12) and/or two different pressures within said hydrostatic drive system.

6. Method according to any of claims 2 to 4, wherein said leakage function comprises a velocity dependent part, wherein the method further comprises the following step for calibrating said velocity dependent part of said leakage function:
g. Determining a second factor of said fluid leakage function based on said first and said second operating variable and an information related to an actual or to a previous velocity of the at least one hydraulic motor (3).

7. Method according to any one of claims 1 to 6, wherein said hydrostatic drive system comprises at least two of said hydraulic motors (3), wherein in said step d. the velocity of each of said at least two hydraulic motors (3) is determined.

8. Method for controlling a hydrostatic drive system of a mobile working machine, the method comprising a method for determining a velocity of at least one hydraulic motor (3) according to claim 1, wherein free movement of the mobile working machine is allowed only after a leakage function comprising a pressure dependent is calibrated according to any of claims 3 to 5.

9. A calculation unit containing means for performing a method according to any of the preceding claims.

10. A mobile working machine comprising a hydrostatic drive system, wherein said hydrostatic drive system comprises a hydraulic pump (12), the rotation of which is provided by a drive motor, and at least one hydraulic motor (3) connected in a closed circuit to said hydraulic pump (12), wherein said hydraulic pump (12) has an adjusting unit (4) for adjusting the displacement of said hydraulic pump, wherein said working machine comprises a calculation unit according to claim 9.

11. A computer program comprising instructions which, when the program is executed by a computer, cause the computer to perform the steps of the method of any one of claims 1 to 7.

12. A computer-readable storage medium comprising instructions which, when executed by a computer, cause the computer to execute the method steps of any one of claims 1 to 7.

Fig. 1

EP 4 711 646 A1

Europäisches
Patentamt

European
Patent Office

Office européen
des brevets

## EUROPEAN SEARCH REPORT

**Application Number**

EP 25 19 8179

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 002 685 A2 (EATON CORP [US]) 24 May 2000 (2000-05-24) * the whole document * | 1-12 | INV. F16H61/47 |
| A | US 2011/290074 A1 (SCHULTE HORST [DE] ET AL) 1 December 2011 (2011-12-01) * paragraphs [0035], [0036]; figures * | 1-12 | |
| A | US 2021/140541 A1 (OASA TAKAHISA [JP]) 13 May 2021 (2021-05-13) * paragraphs [0104], [0105]; figures 1,2 * | 1-12 | |

**TECHNICAL FIELDS SEARCHED (IPC)**

F16H
E02F
F15B

The present search report has been drawn up for all claims

| Place of search | Date of completion of the search | Examiner |
|---|---|---|
| Munich | 21 November 2025 | Meritano, Luciano |

EPO FORM 1503 03.82 (P4C01)

## ANNEX TO THE EUROPEAN SEARCH REPORT
## ON EUROPEAN PATENT APPLICATION NO.

EP 25 19 8179

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2025

| Patent document cited in search report | | Publication date | Patent family member(s) | | Publication date |
|---|---|---|---|---|---|
| EP 1002685 | A2 | 24-05-2000 | DE | 69935033 T2 | 28-06-2007 |
| | | | EP | 1002685 A2 | 24-05-2000 |
| | | | JP | 4178435 B2 | 12-11-2008 |
| | | | JP | 2000158977 A | 13-06-2000 |
| | | | US | 6164402 A | 26-12-2000 |
| US 2011290074 | A1 | 01-12-2011 | CN | 102224361 A | 19-10-2011 |
| | | | DE | 102008059029 A1 | 27-05-2010 |
| | | | EP | 2370711 A1 | 05-10-2011 |
| | | | US | 2011290074 A1 | 01-12-2011 |
| | | | WO | 2010060510 A1 | 03-06-2010 |
| US 2021140541 | A1 | 13-05-2021 | CN | 110199142 A | 03-09-2019 |
| | | | EP | 3553347 A1 | 16-10-2019 |
| | | | JP | 7021210 B2 | 16-02-2022 |
| | | | JP | WO2019003763 A1 | 23-04-2020 |
| | | | US | 2021140541 A1 | 13-05-2021 |
| | | | WO | 2019003763 A1 | 03-01-2019 |

EPO FORM P0459

For more details about this annex : see Official Journal of the European Patent Office, No. 12/82